# EUROPEAN PATENT APPLICATION

(11) **EP 3 599 005 A1**
(43) Date of publication of application: **29.01.2020**
(21) Application number: 19163202.5
(22) Date of filing: 19.07.2018
(51) Int. Cl.: B01D 33/11, B01D 33/46, B01D 29/35, B01D 29/64, B01D 29/68, B01D 33/50, B01D 29/11, B01D 33/42

(54) **FILTER ARRANGEMENT**

(62) Divisional of application: 18184354.1
(71) Applicant: Timber Nor OÜ, 10616 Tallinn (EE)
(72) Inventor: SANDUM, Arthur, N-3534 Sokna (NO)
(74) Representative: Hoefer & Partner Patentanwälte mbB

(57) **Abstract**

The invention relates to a filter arrangement (1) for cleaning wastewater, comprising a housing (2), at least one filter unit (20) arranged in the housing (2) with a cylindrical filter basket (21), rotationally symmetric to a filter axis (22), and at least one cleaning unit (30), wherein the filter basket (21) is rotatable relative to the cleaning unit (30) and/or the cleaning unit (30) is rotatable relative to the filter basket (21) around the filter axis (22), wherein the cleaning unit (30) comprises: a nozzle module (31) with a multitude of nozzle units (33), designed to spray water onto the filter basket (21) to dissolve dirt, and a suction module (37) opposite the nozzle module (31), wherein the filter basket (21) is arranged between the nozzle module (31) and the suction module (37) and the suction module (37) is designed to suck off the mixture of sprayed water and dissolved dirt.

## Description

The invention relates to a filter arrangement for cleaning wastewater. Preferably, the filter arrangement is used for cleaning wastewater from bodies of water, for example harbour basins, seas, lakes, or rivers. Furthermore, the filter arrangement can also be used for cleaning wastewater from ballast water tanks of ships or other wastewater.

It is an object of the present invention to provide a filter arrangement for cleaning wastewater, which, with simple production and low-maintenance operation, enables efficient cleaning of wastewater. Preferably, the filter arrangement is to be usable for permanent operation and for cleaning large quantities of wastewater.

The object is solved by the features of the independent claims. The subject matter of the dependent claims are advantageous embodiments of the invention.

Thus, the object is solved by a filter arrangement for cleaning wastewater. Preferably, the filter arrangement is designed for cleaning wastewater from bodies of water, for example seas, harbour basins, lakes, or rivers. Furthermore, the filter arrangement can, for example, also be used for cleaning wastewater from ballast water tanks of ships. Furthermore, it is possible to use the filter arrangement for cleaning other wastewater.

The filter arrangement comprises a housing. The housing is preferably designed cylindrically and comprises a base and a lid opposite one another. Base and lid are connected with one another by a wall. Preferably, the housing is designed to arrange the filter axis defined in the following in a vertical orientation when using the filter arrangement.

The filter arrangement further comprises at least one filter unit. In a preferred embodiment, the housing can include a plurality of filter units concentrically arranged inside one another. In particular, one, two, three, or four filter units are provided in the housing.

The individual filter unit comprises a cylindrical filter basket. The filter basket is rotationally symmetric to the filter axis. When using a plurality of filter units, the filter baskets may in particular differ in their mesh size. Thus, for example, one filter unit may be used with a filter basket as a fine filter and another filter unit with a filter basket as a coarse filter.

Beside the filter basket, at least one of the filter units, preferably each filter unit, comprises at least one cleaning unit. Preferably, the individual filter unit comprises a plurality of cleaning units, in particular one, two, three, four, five, or six filter units. In the following, one cleaning unit is mostly described, wherein the further cleaning units to be preferably used are designed equally.

The filter basket is rotatable relative to the cleaning unit. This means that the cleaning unit is fixed relative to the housing, and the filter basket can be driven to rotate around the filter axis. In that, the filter basket rotates relative to the housing and relative to the cleaning unit. As will be described in detail later, the individual cleaning unit is connected to a suction line, a pressurised water line and, if applicable, a compressed air line. Therefore, it makes sense to fixedly arrange the cleaning unit in the housing and to rotate the filter basket relative to the cleaning unit. However, it is also provided, even though with a higher technical effort, to additionally or alternatively move the cleaning unit relative to the filter basket and thus also relative to the housing.

With the relative movement between filter basket and cleaning unit, the filter basket can be cleaned along its entire circumference and its entire height. This cleaning can occur during operation of the filter arrangement. This means that during rotation, and thus during cleaning, wastewater can still be pumped through the filter arrangement for filtering.

The individual cleaning unit extends parallel to the filter axis in its height, preferably over the entire filter basket, so that, by means of the cleaning unit, the filter basket can be cleaned over its entire height.

The filter arrangement preferably comprises at least one drive. The drive, for example, comprises an electric motor and a respective gearbox. The drive is drivingly connected to the filter basket or the cleaning unit. In that, it is also possible that, via a rigid connection or a respective distribution gearbox, a plurality of filter baskets and/or a plurality of cleaning units are rotated simultaneously.

The drive is preferably mounted on the lid or the base of the housing.

Perpendicular to the filter axis, a radial direction of the filter arrangement is defined. Preferably, it is provided that the wastewater is radially fed into the filter arrangement or the housing, resp. In that, the wastewater flows radially outward through the one filter basket or the plurality of filter baskets. Accordingly, a water inlet to feed the wastewater into the housing is preferably centrally located at the base or in the lid of the housing. The water outlet to discharge the cleaned water is preferably located at the wall of the housing or eccentrically at the base or the lid of the housing.

However, in the reverse variant, it is also possible to have the wastewater flow from radially outside to radially inside through the at least one filter basket. Accordingly, the cleaned water then accumulates in the radially inner area of the housing.

### Cleaning unit

Preferably, the individual cleaning unit comprises a nozzle module and a suction module. The nozzle module as well as the suction module preferably respectively extend over the entire height of the respective filter basket.

The nozzle module comprises a multitude of nozzle units. The nozzle units are designed to spray or splash, resp., water onto the filter basket to dissolve dirt. For that, it is preferably provided that the plurality of nozzle units are arranged on top of one another in a direction parallel to the filter axis. Preferably, the nozzle module comprises between 10 and 100 of the nozzle units. The nozzle module is preferably arranged such that it flushes the dirt from the filter basket in a direction opposite the direction of flow of the wastewater. Accordingly, the nozzle module is preferably located on the "clean" side of the filter basket.

The nozzle module is located directly opposite the suction module. The filter basket is located between nozzle module and suction module. Thus, the nozzle module flushes the dirt into the suction module. The suction module is designed to suck off the resulting mixture of sprayed water and dissolved dirt.

The nozzle module is connected to a pressurised water line, preferably within the housing, which supplies the individual nozzle units with pressurised water. The suction module is connected to a suction line, preferably within the housing. The housing preferably has at least one connection for the suction line and the pressurised water line running inside the housing at the base, the lid, or the wall.

The filter arrangement preferably comprises a suction pump connectable to the suction line and/or a pump connectable to the pressurised water line.

In particular when using a plurality of filter units and/or a plurality of cleaning units, a plurality of pressurised water lines and/or a plurality of suction lines may also be used in the housing for connecting the various cleaning units.

Furthermore, it is preferably provided that the nozzle module and the suction module are arranged such that, for the respective suction unit, exactly one, two, or three nozzle unit(s) is/are oppositely arranged. In an alternative preferred embodiment, it is preferably provided that, for the respective nozzle unit, exactly one, two, or three suction unit(s) is/are oppositely arranged. The opposite arrangement refers to a direction perpendicular to the filter axis.

### Suction module

In a preferred embodiment, it is provided that the individual suction module comprises a collector duct. The suction line is connected to this collector duct. In that, it is preferably provided that the suction line leads into the collector duct in several places. Thereby, suction from the collector duct does not take place in one place only.

The collector duct preferably extends in a direction parallel to the filter axis over the entire height of the filter basket. The collector duct preferably is the load-bearing component of the suction module and preferably is attached at the base and/or the lid of the housing. For the radially outmost filter unit, it is also possible to attach the collector duct at the wall of the housing, in particular when the wastewater is filtered from radially outside to radially inside.

Furthermore, the individual suction module comprises a multitude of suction units, in particular 10 to 100 suction units. The suction units are preferably arranged on top of one another in a direction parallel to the filter axis. The individual suction unit preferably comprises one tubular suction element each, which with one end ends in the collector duct and with the other end protrudes to the filter basket to receive the mixture of water and dissolved dirt.

Within the scope of this application, "tube", "tubular", "tubular element", etc. shall mean a component with any cross-section having two open ends.

The "collector duct" can also be divided into several individual collector ducts, which respectively each are connected to the suction line. These individual collector ducts are then arranged on top of one another in a direction parallel to the filter axis.

Furthermore, it is preferably provided that the suction module is slidingly in contact with the filter basket, and in particular the individual suction units are respectively slidingly in contact with the filter basket. Thereby, no gap results between suction module and filter basket, and the entire mixture of dissolved dirt and water can be sucked off.

Alternatively, for that, it is also provided that the suction module, in particular the individual suction units, are only minimally spaced from the filter basket. In particular, the gap resulting in that is 5 mm, at most, preferably 3 mm, at most, particularly preferred 1 mm, at most.

For the sliding contact with the filter basket, it is preferably provided that the suction module comprises a plurality of sliding suction elements. Such a sliding suction element can respectively surround a plurality of tubular suction elements. Particularly preferred, however, it is provided that, for each suction unit, and thus for each tubular suction element, exactly one sliding suction element is arranged. The sliding suction elements are slidingly in contact with the filter basket in a sealing fashion.

The sliding suction elements are preferably manufactured from plastic or a composite material. Particularly preferred, the sliding suction elements are manufactured from polyethylene, in particular high-density polyethylene.

The individual sliding suction element preferably surrounds one or more tubular suction element(s) over its/their entire circumference, and in that provides sealing relative to the filter basket on one side and relative to the remaining elements of the suction module on the other side.

Particularly preferred, it is provided that the respective sliding suction element is linearly slidable relative to the tubular suction element of the suction unit, and is preloaded in the direction of the filter basket through an elastic element. The linear slidability thus preferably extends perpendicular to the filter axis. The elastic element, preferably a spiral spring, presses the sliding suction element onto the filter basket. Particularly preferred, for that, the respective sliding suction element is mounted on an individual tubular suction element, and is guided on this tubular suction element in a linearly movable fashion.

Furthermore, it is preferably provided that the sliding suction element has a concave or convex side. With this side, the sliding suction element is in contact with the filter basket. Upon positioning of the suction module on the radial inside of the filter basket, the sliding suction elements preferably have the convex side. Upon arrangement of the suction module on the radial outside of the filter basket, the sliding suction elements preferably have the concave side.

The filter arrangement preferably comprises at least one compressed air line, which ends in the collector duct. Particularly preferred, the compressed air line ends in the upper half of the collector duct, with regard to the arrangement of the filter arrangement with a vertically upright filter axis. Introducing pressurised air into the suction module improves sucking off of the mixture.

Via the compressed air line, pressurised air can be guided into the collector duct. Thereby, a mixture of dissolved dirt, sprayed-on water, and pressurised air is formed in the collector duct. Furthermore, this mixture can contain possible leakages from wastewater. This leakage can result despite the sealing contact of the suction module to the filter basket.

The filter arrangement preferably comprises an air compressor connectable to the compressed air line.

### Nozzle module

The individual nozzle module preferably comprises a distribution channel. To the distribution channel, at least one water pressure line is connected. In that, it is preferably provided that the water pressure line leads into the distribution channel in several places. Thereby, the pressurised water is distributed well over the distribution channel.

The distribution channel preferably extends in a direction parallel to the filter axis over the entire height of the filter basket. The distribution channel preferably is the load-bearing component of the nozzle module and preferably is attached at the base and/or the lid of the housing. For the radially outmost filter unit, it is also possible to attach the distribution channel at the wall of the housing, in particular when the wastewater is filtered from radially inside to radially outside.

The nozzle units preferably comprise one tubular nozzle element each, which with one end is connected to the distribution channel and with the other end protrudes to the filter basket for spraying the water.

The "distribution channel" can also be divided into several individual distribution channels, which respectively each are connected to the water pressure line. These individual distribution channels are then arranged on top of one another in a direction parallel to the filter axis.

Furthermore, it is preferably provided that the nozzle module is slidingly in contact with the filter basket, in particular the individual nozzle units are respectively slidingly in contact with the filter basket. Thereby, no gap results between nozzle module and filter basket, and the sprayed-on water does not mix with the wastewater, but completely passes through the filter basket up into the suction module.

Alternatively, for that, it is also provided that the nozzle module, in particular the individual nozzle units, are only minimally spaced from the filter basket. In particular, the gap resulting in that is 5 mm, at most, preferably 3 mm, at most, particularly preferred 1 mm, at most.

For the sliding contact with the filter basket, it is preferably provided that the nozzle module comprises a plurality of sliding nozzle elements. Such a sliding nozzle element can respectively surround a plurality of tubular nozzle elements. Particularly preferred, however, it is provided that, for each nozzle unit, and thus for each tubular nozzle element, exactly one sliding nozzle element is arranged. The sliding nozzle elements are slidingly in contact with the filter basket in a sealing fashion.

The sliding nozzle elements are preferably manufactured from plastic or a composite material. Particularly preferred, the sliding nozzle elements are manufactured from polyethylene, in particular high-density polyethylene.

The individual sliding nozzle element preferably surrounds one or more tubular nozzle element(s) over its/their entire circumference, and in that provides sealing relative to the filter basket on one side and relative to the remaining elements of the nozzle module on the other side.

Particularly preferred, it is provided that the respective sliding nozzle element is linearly slidable relative to the tubular nozzle element of the nozzle unit, and is preloaded in the direction of the filter basket through an elastic element. The linear slidability thus preferably extends perpendicular to the filter axis. The elastic element, preferably a spiral spring, presses the sliding nozzle element onto the filter basket. Particularly preferred, for that, the respective sliding nozzle element is mounted on an individual tubular nozzle element and is guided on this tubular nozzle element in a linearly movable fashion.

Furthermore, it is preferably provided that the sliding nozzle element has a concave or convex side. With this side, the sliding nozzle element is in contact with the filter basket. Upon positioning of the nozzle module on the radial inside of the filter basket, the sliding nozzle elements preferably have the convex side. Upon arrangement of the nozzle module on the radial outside of the filter basket, the sliding nozzle elements preferably have the concave side.

### Sensors

Furthermore, the filter arrangement preferably comprises one or more sensors for acquiring a pressure in the housing. For that, the sensors can be located in the housing, or can be connected with the respective areas of the housing in a fluid-conducting fashion.

The sensors are preferably designed to acquire the pressure in respective areas of the housing.

Preferably, the filter arrangement comprises a control unit. The control unit is designed to control, based on the pressure acquired by at least one sensor, speed and duration of the drive for the rotation of the filter basket and/or the cleaning unit. In addition, or alternatively, the control device is preferably designed to control, based on the pressure acquired by at least one sensor, pressure and/or mass flow of the compressed air line leading to the suction module.

### Bearing

Preferably, it is provided that the filter basket is supported and rotatably mounted on the base of the housing. For that, it is in particular provided that the filter basket has an annular slide ring at its bottom side. On the housing side, in particular at the base, a complementary slide ring is preferably arranged. The two slide rings slide on one another upon rotation of the filter basket.

The two slide rings are designed as axial bearings with regard to the filter axis, and thus also bear the weight of the filter basket.

The slide rings are preferably manufactured from ceramics or plastic, in particular high-density polyethylene.

In order to receive the slide ring, the filter basket preferably comprises a filter ring.

On the housing side, at least one housing ring is preferably arranged at the base. The housing-side slide ring is arranged in this housing ring(s) or on this housing ring(s). The housing ring(s) preferably receive(s) two annular gaskets, wherein the filter basket, in particular the filter ring, is arranged between these two annular gaskets.

### Method

Furthermore, the invention comprises a method for operating a filter arrangement. Preferably, the method is used for operating the previously described filter arrangement. The method comprises the following steps:
(i) Rotating of a cleaning unit relative to a filter basket and/or rotating of the filter basket relative to the cleaning unit. Preferably, this is the cleaning unit described or the filter basket described, resp., which are elements of the filter unit described. In turn, the filter unit is preferably arranged in the housing described.
(ii) During the rotation, water is sprayed with a nozzle module, preferably the nozzle module described, onto the filter basket to dissolve dirt.
(iii) Simultaneously with the spraying, the mixture of sprayed water and dissolved dirt resulting therefrom is sucked off with a suction module, preferably the suction module described.

In the method, it is preferably provided that the mixture of sprayed water and dissolved dirt is admixed with pressurised air in the suction module.

Furthermore, it is preferably provided that pressure and/or mass flow of the admixed pressurised air is/are controlled depending on a pressure measured at the filter arrangement. Furthermore, it is preferably provided that speed and/or duration of the rotation of the filter basket and/or the cleaning unit is/are controlled depending on a pressure measured at the filter arrangement.

Further details, advantages, and features of the present invention result from the following description of an embodiment by reference to the drawings. Therein:
- Fig. 1: shows a schematic view of an inventive filter arrangement according to an embodiment,
- Fig. 2: shows a further schematic view of the inventive filter arrangement according to the embodiment,
- Fig. 3: shows a schematic sectional view of the inventive filter arrangement according to the embodiment,
- Fig. 4: shows a cleaning unit of the inventive filter arrangement according to the embodiment,
- Fig. 5: shows a detail from Fig. 4,
- Fig. 6: shows a nozzle unit and a suction unit of the cleaning unit of the inventive filter arrangement according to the embodiment,
- Figs. 7, 8: show the sections VII, VIII indicated in Fig. 6,
- Fig. 9: shows a further schematic sectional view of the inventive filter arrangement according to the embodiment, and
- Fig. 10: shows a detail from Fig. 9.

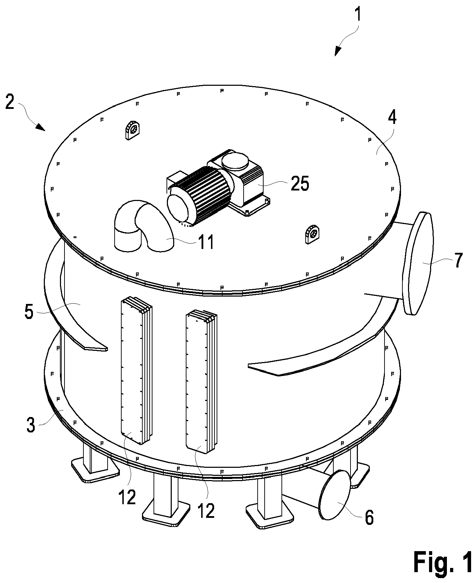

In the following, by reference to Figs. 1 to 10, an inventive embodiment of a filter arrangement will be described in detail. In that, unless stated otherwise, reference is always made to Figs. 1 to 10.

The filter arrangement 1 comprises a housing 2. The housing 2 is designed cylindrically and comprises a base 3 and a lid 4 opposite one another. The base 3 and the lid 4 are connected with one another via a casing-shaped wall 5 and screwed thereto.

At the base 4, a water inlet 6 for feeding wastewater into the housing 2 is arranged. At the wall 5, a water outlet 7 for discharging the cleaned water is located.

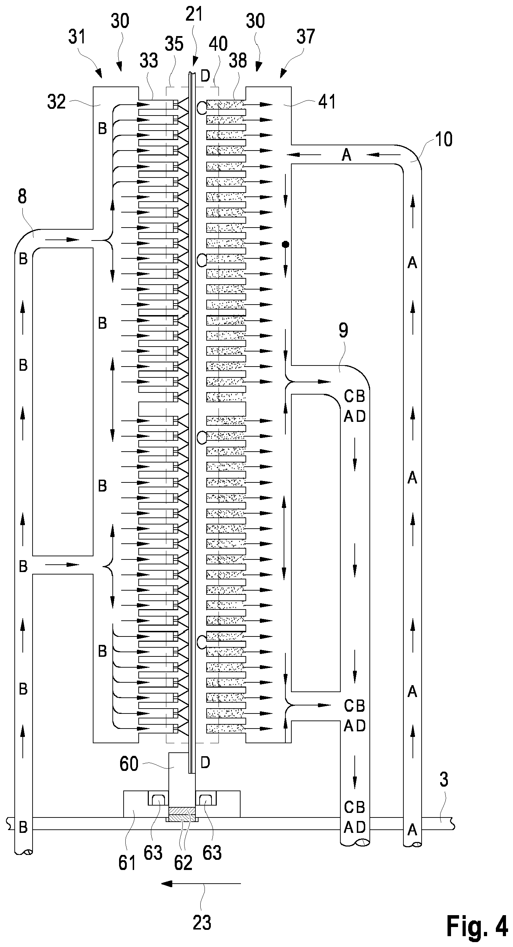

Furthermore, the filter arrangement comprises a pressurised water line 8, a suction line 9, and a compressed air line 10, which will be described in detail by reference to Fig. 4. The housing-side connections for the pressurised water line 8, the suction line 9, and the compressed air line 10 are preferably located at the base 3 of the housing 2.

Furthermore, the housing 2 comprises an air outlet 11, in the example shown at the lid 4. Via the air outlet 11, pressure is compensated between the atmosphere and the inside of the housing 2.

For functional inspections, the housing 2 is provided with the inspection window 12.

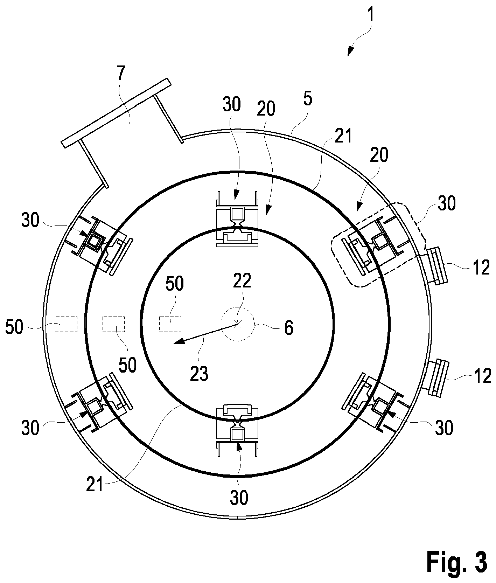

As in particular shown in Fig. 3, the filter arrangement 1 comprises two filter units 20. Each filter unit 20 has a filter basket 21. The filter baskets 21 are arranged rotationally symmetric to a common filter axis 22. The entire filter arrangement 1 is designed such that it can be operated with a vertically upright filter axis 22.

Perpendicular to the filter axis 22, a radial direction 23 is defined. In the embodiment shown, the wastewater is fed into the radial inside of the filter units 20 via the water inlet 6, and thus flows outward along the radial direction 23 up to the water outlet 7. Accordingly, the inner filter basket 21 is designed as a coarse filter and the outer filter basket 21 as a fine filter. The two filter baskets 21 are respectively positioned coaxially to the central filter axis 22.

The filter units 20 have a plurality of cleaning units 30 each. In the example shown, the inner filter unit 20 comprises two cleaning units 30. The outer filter unit 20 comprises four cleaning units 30.

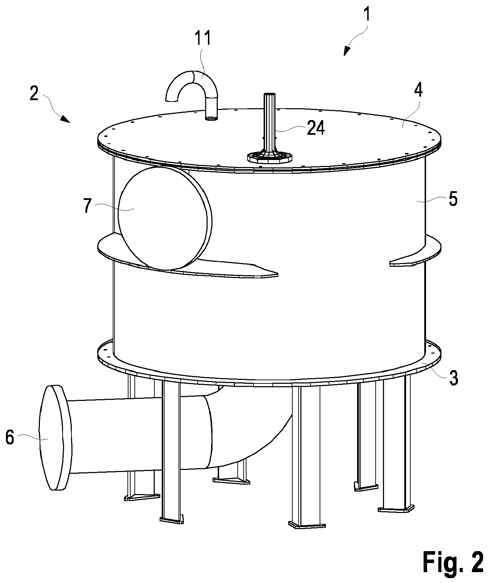

The respective filter baskets 21 are rotatably arranged relative to the housing 2 and also relative to the cleaning units 30 around the filter axis 22. In order to rotate the filter baskets 21, a drive 25 (Fig. 1) is provided, which, via a drive shaft 24 (Fig. 2), can rotate the filter baskets 21.

The drive shaft 24 shown in Fig. 2 can be drivingly connected with both filter baskets 21 via a gearbox (not shown) or a respectively rigid connection.

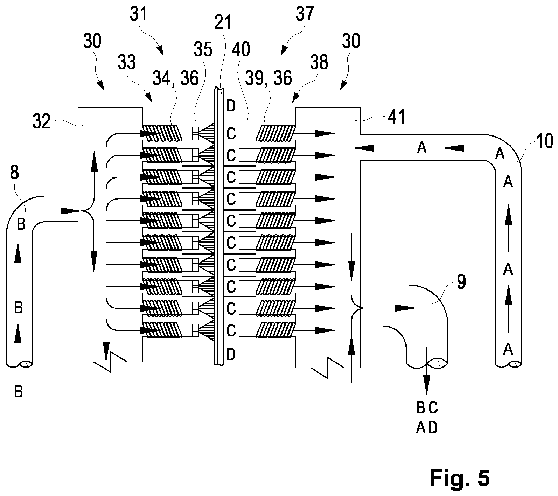

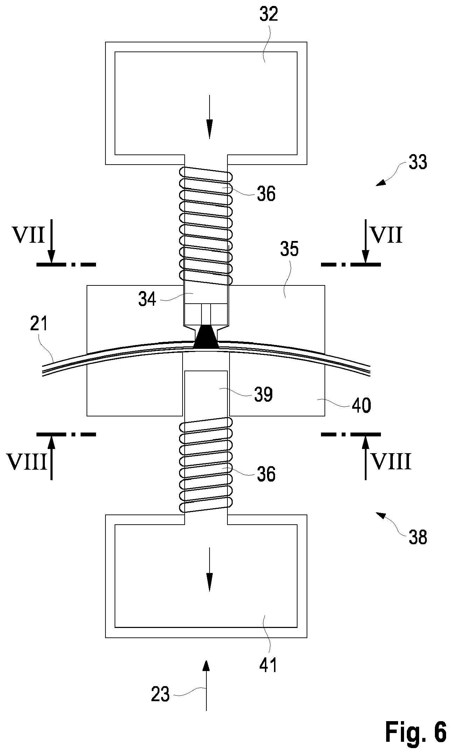

Fig. 4 shows an individual cleaning unit 30 as well as the associated filter basket 21 in a sectional view. Figs. 5 and 6 show details of the cleaning unit 30.

The cleaning unit 30 comprises a nozzle module 31 and a suction module 37. The filter basket 21 is arranged between the nozzle module 31 and the suction module 37.

The nozzle module 31 comprises a distribution channel 32 extending over the entire height of the filter basket 21. The distribution channel 32 is connected to the pressurised water line 8.

Furthermore, the nozzle module 31 comprises a multitude of nozzle units 33 arranged on top of one another. Each nozzle unit 33 comprises a tubular nozzle element 34. With the tubular nozzle element 34, the nozzle module 31 protrudes directly to the filter basket 21. In the tubular nozzle elements 34, respective nozzles for spraying the water onto the filter basket 21 are located.

With one end, the tubular nozzle elements 34 are connected to the distribution channel 32, and with the other end or the nozzles arranged thereon, resp., they protrude up to the filter basket 21.

The suction module 37 comprises a multitude of suction units 38 arranged on top of one another with one tubular suction element 39 each. Furthermore, the suction module 37 comprises a collector duct 41, which in the example shown is connected to the suction line 9 in two places. The collector duct 41 extends over the entire height of the filter basket 21.

The tubular suction elements 39 end with one end in the collector duct 41. The opposite end protrudes up to the filter basket 21.

Fig. 6 shows in detail an individual nozzle unit 33 and an individual suction unit 38 with the filter basket 21 arranged therebetween.

By reference to the representation in Fig. 6, it can be seen that the nozzle module 31 comprises a plurality of sliding nozzle elements 35. In the embodiment shown, for each nozzle unit 33, and thus for each tubular nozzle element 34, one sliding nozzle element 35 each is provided. Accordingly, the suction module 37, comprises a plurality of sliding suction elements 40. In the example shown, for each suction unit 38, and thus for each tubular suction element 39, exactly one sliding suction element 40 is provided.

The sliding nozzle element 35 surrounds the tubular nozzle element 34 over its entire circumference, and is supported thereon in a linearly movable fashion. Accordingly, the sliding suction element 40, surrounds the tubular suction element 39 over its entire circumference, and is supported thereon in a linearly movable fashion.

In that, elastic elements 36 in the form of spiral springs are provided, pressing the sliding suction elements 40 or the sliding nozzle elements 35, resp., against the filter basket 21, so that these sliding elements can be slidingly in contact with the filter basket 21.

The sliding nozzle element 35 is concave on its side facing the filter basket 21. The sliding suction element 40 is convex on its side facing the filter basket 21.

Figs. 4 and 5 illustrate the spraying of water B onto the filter basket 21 and the sucking off of the mixture of sprayed water B and dirt C resulting therefrom. Together with the supplied pressurised air A, a mixture of sprayed water B, dirt C, and pressurised air A, possibly with small quantities of wastewater D due to leakages, results in the collector duct 41.

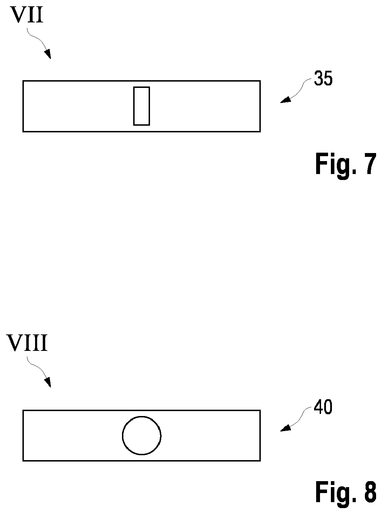

Figs. 7 and 8 show, in a purely schematic representation, the indicated sections VII or VIII, resp., from Fig. 6. By reference to these figures, it can be seen that the sliding elements 35, 40 have a rectangular cross-section.

Fig. 7 shows the relatively small rectangular nozzle in addition to the sliding nozzle element 35.

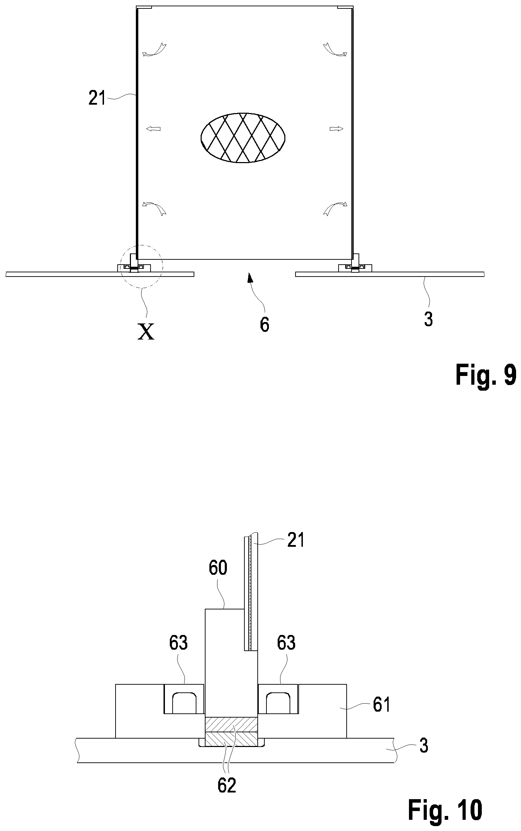

Fig. 9 shows a further schematic sectional view of the filter arrangement 1, wherein only the base 3 of the housing 2 and one filter basket 21 of one of the two filter units 20 are represented. Fig. 10 shows the detail X indicated in Fig. 9.

By reference to Fig. 10, the bearing of the filter basket 21 relative to the housing 2 is represented. Accordingly, the filter basket 21 comprises an annular slide ring 62. This slide ring 62 is preferably connected with the filter basket 21 via a filter ring 60.

On the housing side, in particular at the base 3, an annular slide ring 62 is likewise provided. The two slide rings 62 slide on one another.

Furthermore, according to this advantageous embodiment, the filter ring 60 is received within two housing rings 61. The housing rings 61 serve receiving two concentric, annular gaskets 63, which provide sealing of the housing 2 relative to the filter basket 21 or the filter ring 60, resp.

The two slide rings 62 are designed as axial bearings with regard to the filter axis 22, and thus also bear the weight of the filter basket 21.

As Fig. 3 shows schematically, sensors 50 can be arranged in various areas of the housing 2. By means of these sensors 50, in particular the pressure in these areas is measured.

Based on the pressure measured by means of the sensors 50 or sensors arranged otherwise, the drive 25 for rotating the filter baskets 21 can be controlled.

Furthermore, it is also possible, based on the pressure, to control the supply of the pressurised air via the compressed air line 10 and/or the sucking off via the suction line 9 and/or the supply of the pressurised water via the pressurised water line 8 and/or the supply of wastewater via the water inlet 6.

The invention is further defined by the following clauses:
I. A filter arrangement (1) for cleaning wastewater, comprising a housing (2), at least one filter unit (20) arranged in the housing (2) with a cylindrical filter basket (21), rotationally symmetric to a filter axis (22), and at least one cleaning unit (30), wherein the filter basket (21) is rotatable relative to the cleaning unit (30) and/or the cleaning unit (30) is rotatable relative to the filter basket (21) around the filter axis (22), wherein the cleaning unit (30) comprises: a nozzle module (31) with a multitude of nozzle units (33) designed to spray water onto the filter basket (21) to dissolve dirt, and a suction module (37) opposite the nozzle module (31), wherein the filter basket (21) is arranged between the nozzle module (31) and the suction module (37), and the suction module (37) is designed to suck off the mixture of sprayed water and dissolved dirt.
II. The filter arrangement according to clause I, wherein the suction module (37) comprises: a collector duct (41) connected to a suction line (9), and a multitude of suction units (38) with one tubular suction element (39) each, which with one end ends in the collector duct (41) and with the other end protrudes to the filter basket (21) to receive the mixture.
III. The filter arrangement according to any one of the preceding clauses, wherein the suction module (37), preferably the suction units (38), are slidingly in contact with the filter basket (21).
IV. The filter arrangement according to clause III, wherein the suction module (37) comprises a plurality of sliding suction elements (40), preferably one sliding suction element (40) per suction unit (38), wherein the sliding suction elements (40) are slidingly in contact with the filter basket (21) in a sealing fashion.
V. The filter arrangement according to clause IV, wherein the respective sliding suction element (40) is linearly slidable relative to the tubular suction element (39) of the suction unit (38) and preloaded in the direction of the filter basket (21) through an elastic element (36).
VI. The filter arrangement according to any one of the preceding clauses, further comprising at least one compressed air line (10), which ends in the suction module (37), in particular the collector duct (41).
VII. The filter arrangement according to any one of clauses II to VI, wherein for each suction unit (38), exactly one, two, or three nozzle unit(s) (33) is/are oppositely arranged or wherein for each nozzle unit (33) exactly one, two, or three suction unit(s) (38) is/are oppositely arranged.
VIII. The filter arrangement according to any one of the preceding clauses, wherein the nozzle module (31): comprises a distribution channel (32) connected to a pressurised water line (8), wherein the nozzle units (33) comprise one tubular nozzle element (34) each, which with one end is connected to the distribution channel (32) and with the other end protrudes to the filter basket (21) for spraying the water.
IX. The filter arrangement according to any one of the preceding clauses, wherein the nozzle module (31), preferably the nozzle units (33), are slidingly in contact with the filter basket (21).
X. The filter arrangement according to clauses IX, wherein the nozzle module (31) comprises a plurality of sliding nozzle elements (35), preferably one sliding nozzle element (35) per nozzle unit (33), wherein the sliding nozzle elements (35) are slidingly in contact with the filter basket (21) in a sealing fashion.
XI. The filter arrangement according to clauses X, wherein the sliding nozzle element (35) is linearly slidable relative to the tubular nozzle element (34) and preloaded in the direction of the filter basket (21) through an elastic element (36).
XII. A method for operating a filter arrangement (1) for cleaning wastewater, preferably according to any one of the preceding clauses, comprising the following steps:
   rotating a cleaning unit (30) relative to a filter basket (21) and/or rotating the filter basket (21) relative to the cleaning unit (30),
   spraying water with a nozzle module (31) of the cleaning unit (30) onto the filter basket (21) to dissolve dirt, and
   sucking off the mixture of sprayed water and dissolved dirt with a suction module (37) of the cleaning unit (30).
XIII. The method according to clauses XII, wherein the mixture of sprayed water and dissolved dirt is admixed with pressurised air in the suction module (37).
XIV. The method according to clause XIII, wherein pressure and/or mass flow of the admixed pressurised air is/are controlled depending on a pressure measured at the filter arrangement (1).
XV. The method according to any one of clauses XII to XIV, wherein speed and/or duration of the rotation of the filter basket (21) and/or the cleaning unit (30) is/are controlled depending on a pressure measured at the filter arrangement (1).

### List of reference signs

- 1: Filter arrangement
- 2: Housing
- 3: Base
- 4: Lid
- 5: Wall
- 6: Water inlet
- 7: Water outlet
- 8: Pressurised water line
- 9: Suction line
- 10: Compressed air line
- 11: Air outlet
- 12: Inspection window
- 20: Filter unit
- 21: Filter basket
- 22: Filter axis
- 23: Radial direction
- 24: Drive shaft
- 25: Drive
- 30: Cleaning unit
- 31: Nozzle module
- 32: Distribution channel
- 33: Nozzle units
- 34: Tubular nozzle element
- 35: Sliding nozzle element
- 36: Elastic element
- 37: Suction module
- 38: Suction unit
- 39: Tubular suction element
- 40: Sliding suction element
- 41: Collector duct
- 50: Sensors
- 60: Filter ring
- 61: Housing ring
- 62: Slide rings
- 63: Gaskets

## Claims

1. A filter arrangement (1) for cleaning wastewater, comprising
• a housing (2),
• at least one filter unit (20) arranged in the housing (2) with
∘ a cylindrical filter basket (21), rotationally symmetric to a filter axis (22), and
∘ at least one cleaning unit (30),
∘ wherein the filter basket (21) is rotatable relative to the cleaning unit (30) and/or the cleaning unit (30) is rotatable relative to the filter basket (21) around the filter axis (22),
• wherein the cleaning unit (30) comprises:
∘ a nozzle module (31) with a multitude of nozzle units (33) designed to spray water onto the filter basket (21) to dissolve dirt, and
∘ a suction module (37) opposite the nozzle module (31), wherein the filter basket (21) is arranged between the nozzle module (31) and the suction module (37), and the suction module (37) is designed to suck off the mixture of sprayed water and dissolved dirt.

2. The filter arrangement according to claim 1, wherein each filter unit (20) comprises a plurality of the cleaning units (3).

3. The filter arrangement according to claim 1 or claim 2, wherein a plurality of the filter units (20), preferably two, three, or four of the filter units, are concentrically arranged inside one another.

4. The filter arrangement according to any one of the preceding claims, wherein the suction module (37) comprises:
• a collector duct (41) connected to a suction line (9), and
• a multitude of suction units (38) with one tubular suction element (39) each, which with one end ends in the collector duct (41) and with the other end protrudes to the filter basket (21) to receive the mixture.

5. The filter arrangement according to claim 4, wherein the collector duct (41) is the load-bearing component of the suction module (37) and is attached at the base (3) and/or lid (4) of the housing (2)

6. The filter arrangement according to any one of the preceding claims, wherein the suction module (37), preferably the suction units (38), are slidingly in contact with the filter basket (21).

7. The filter arrangement according to claim 6, wherein the suction module (37) comprises a plurality of sliding suction elements (40), preferably one sliding suction element (40) per suction unit (38), wherein the sliding suction elements (40) are slidingly in contact with the filter basket (21) in a sealing fashion.

8. The filter arrangement according to claim 7, wherein the respective sliding suction element (40) is linearly slidable relative to the tubular suction element (39) of the suction unit (38) and preloaded in the direction of the filter basket (21) through an elastic element (36).

9. The filter arrangement according to any one of the preceding claims, further comprising at least one compressed air line (10), which ends in the suction module (37), in particular the collector duct (41).

10. The filter arrangement according to any one of the preceding claims, wherein the nozzle module (31):
• comprises a distribution channel (32) connected to a pressurised water line (8),
• wherein the nozzle units (33) comprise one tubular nozzle element (34) each, which with one end is connected to the distribution channel (32) and with the other end protrudes to the filter basket (21) for spraying the water.

11. The filter arrangement according to claim 10, wherein the distribution channel (32) is the load-bearing component of the nozzle module (31) and is attached at the base (3) and/or lid (4) of the housing (2).

12. A method for operating a filter arrangement (1) for cleaning wastewater according to any one of the preceding claims, comprising the following steps:
• rotating a cleaning unit (30) relative to a filter basket (21) and/or rotating the filter basket (21) relative to the cleaning unit (30),
• spraying water with a nozzle module (31) of the cleaning unit (30) onto the filter basket (21) to dissolve dirt, and
• sucking off the mixture of sprayed water and dissolved dirt with a suction module (37) of the cleaning unit (30).

13. The method according to claim 12, wherein the mixture of sprayed water and dissolved dirt is admixed with pressurised air in the suction module (37).

14. The method according to claim 13, wherein pressure and/or mass flow of the admixed pressurised air is/are controlled depending on a pressure measured at the filter arrangement (1).

15. The method according to any one of claims 12 to 14, wherein speed and/or duration of the rotation of the filter basket (21) and/or the cleaning unit (30) is/are controlled depending on a pressure measured at the filter arrangement (1).
